# FASCICULE DE BREVET EUROPEEN

(11) **EP 2 454 471 B1**
(45) Date de publication et mention de la délivrance du brevet: **08.03.2017**
(21) Numéro de dépôt: 10734268.5
(22) Date de dépôt: 18.06.2010
(51) Int. Cl.: F03D 1/00, E02D 27/52, F03D 13/20

(54) **EOLIENNE MARITIME À PYLÔNE AJUSTÉ VERTICALEMENT PAR CALAGE.**
MEERESWINDKRAFTANLAGE MIT VERTIKAL EINSTELLBAREM MAST
MARINE WIND TURBINE HAVING A PYLON VERTICALLY ADJUSTED BY SETTING

(30) Priorité: 15.07.2009 FR 0954882
(43) Date de publication de la demande: 23.05.2012
(73) Titulaire: Saipem SA, 78180 Montigny-le-Bretonneux (FR)
(72) Inventeur: TOSELLO, André, F-92290 Chatenay-malabry (FR)
(74) Mandataire: Domange, Maxime
(86) Numéro de dépôt international: PCT/FR2010/051222
(87) Numéro de publication internationale: WO 2011/007065

(56) Documents cités:
- WO-A1-2004/015207
- CH-A- 241 601
- GB-A- 2 394 498
- GB-A- 2 451 191

## Description

La présente invention est relative aux éoliennes installées au large des côtes, en particulier en mer.

Plus particulièrement, le domaine technique de l'invention est celui de la fabrication, du transport et de l'installation d'éoliennes de production d'énergie électrique, plus particulièrement d'éoliennes offshore de très grande capacité, destinées à être installées en mer, plus particulièrement au large des côtes et en grand nombre pour former des champs d'éoliennes.

Alors que des moteurs à vent terrestres sont construits depuis plusieurs siècles, la construction d'éoliennes en mer est beaucoup plus récente.

Une éolienne moderne, tant terrestre que marine, comporte généralement un moteur à plusieurs pales et à axe horizontal, ainsi qu'un générateur électrique accouplé au moteur, qui sont fixés à l'extrémité supérieure d'un support allongé verticalement tel qu'un mât ou pylône.

Dans le but de diminuer le coût de l'énergie éolienne et d'augmenter le rendement des générateurs, on fabrique des générateurs de plus en plus puissants que l'on installe de façon groupée pour former un champ ou ferme éolien(ne).

L'augmentation de la puissance d'un générateur éolien s'accompagne notamment d'une augmentation de sa masse ainsi que de la hauteur de la structure le supportant.

Pour des raisons économiques, on est conduit à mettre en oeuvre des éoliennes de plus en plus puissantes et donc de plus en plus grandes dimensions, notamment de hauteur de plus en plus grande. De même, ces éoliennes sont installées à des distances de plus en plus éloignées des côtes et donc à des profondeurs de plus en plus grandes.

L'invention s'applique particulièrement, c'est-à-dire non limitativement, aux éoliennes comportant un générateur dont la puissance est située dans une plage allant de 100kW à 10 MW ; la masse d'un tel générateur peut atteindre ou dépasser 300 ou 500 tonnes ; la longueur d'un pylône supportant ce générateur peut être de l'ordre de 50 à 100 mètres, et la masse du pylône peut être située dans une plage allant de 100 à 500 tonnes.

On comprend donc que la construction de telles éoliennes et l'installation en mer présente de grandes difficultés. On a proposé différentes solutions pour la construction et l'installation des éoliennes offshore.

Des éoliennes maritimes ont été décrites dans WO 01/34977 et WO 03/004870 par exemple.

Les éoliennes installées en mer sont en général assemblées sur site après avoir préalablement créé une fondation constituée par une pile de plusieurs mètres de diamètre enfoncée dans le sol, l'extrémité supérieure étant munie d'une bride sur laquelle une contre-bride identique, solidaire du pylône de l'éolienne est boulonnée pour assurer l'encastrement de l'ensemble.

Une autre solution consiste à utiliser un tripode reposant sur le sol et ancré dans ce dernier par des piles foncées à travers l'embase dudit tripode, et cimentées pour assurer la rigidité de l'ensemble.

Une autre solution consiste à poser sur le sol une structure de type embase gravitaire reposant sur le sol marin et assurant un ancrage de par son propre poids, au sommet de laquelle est solidaire une bride sur laquelle on vient positionner l'éolienne équipée d'une contre-bride identique.

Dans tous les cas, l'encastrement de l'extrémité inférieure du pylône sur l'embase représente un point de fragilité de l'éolienne. D'autre part, la verticalité de l'éolienne n'est correcte que dans la mesure où le plan de la bride solidaire de l'embase est parfaitement horizontal, c'est à dire que son axe est parfaitement vertical. Or, il se pose un problème de positionnement vertical ou de maintien en position verticale de l'axe ZZ' du pylône en cours de vie de l'installation, du fait du tassement différentiel du sol ou de l'empierrement réalisé au fond de la mer sur lequel pose ou ancre l'embase ou la fondation du pylône. Le pylône doit être parfaitement vertical pour que l'éolienne assure un fonctionnement correct durant toute sa durée de vie qui atteint et peut dépasser 20-25 ans.

En général, l'ajustement de la verticalité se fait au niveau des bride et contre-bride de fixation de l'extrémité inférieure du pylône et de l'embase. Toutefois, un tel ajustement de la verticalité n'est pas simple à réaliser et doit être extrêmement rigide ; de plus la verticalité ne peut pas être ajustée de manière très fine pour que la verticalité finale de l'éolienne soit parfaite.

Dans WO 2004/015207 et GB 2 394 498, on décrit des systèmes d'encastrement et d'ajustement de la verticalité d'un pylône d'éolienne reposant sur une embase au fond de la mer. Mais, les moyens décrits ne permettent pas une modification aisée de l'ajustement de l'inclinaison du pylône de l'éolienne au cours du temps et les moyens d'encastrement du pylône au niveau de l'embase ne sont pas suffisamment fiables en termes de précision et de rigidité. En fait, une fois l'inclinaison ajustée, on réalise un cimentage définitif de la cavité tubulaire dans laquelle l'extrémité inférieure du pylône est encastrée, laquelle cavité tubulaire se trouve entièrement immergée.

Ainsi, le problème à résoudre est de réaliser une éolienne dont la rigidité de l'encastrement de pylône sur l'embase est améliorée.

Un autre problème est de réaliser un dispositif d'ajustement de la verticalité d'un pylône d'éolienne qui soit d'une rigidité extrême et permette un ajustement très précis de ladite verticalité, tout en restant simple à opérer et peu coûteux à mettre en oeuvre.

Un autre problème à résoudre est de pouvoir réajuster la verticalité d'une éolienne durant sa vie opérationnelle, lorsque des tassements différentiels se sont produits au niveau du sol, de tels tassements conduisant à une inclinaison de l'embase par rapport à la position théorique horizontale et donc inclinaison du pylône de l'éolienne par rapport à la position théorique verticale, risquant de conduire à terme à des dommages mécaniques importants au niveau de la tourelle supportant le rotor et le générateur du moteur à vent.

Pour ce faire, la présente invention fournit une éolienne maritime reposant au fond de la mer comportant :
- une embase, comprenant une surface d'appui inférieure apte à être ou étant en appui sur le sol au fond de la mer, et
- un pylône supportée par ladite embase, dont l'extrémité inférieure est de préférence encastrée dans ladite embase, et
- un moteur à vent supporté par ledit pylône à son extrémité supérieure comprenant un arbre rotatif d'axe horizontal entraîné en rotation par un moteur et supportant une pluralité de pales et ledit moteur à vent étant accouplé à une génératrice d'électricité, celle-ci étant de préférence également supportée par ledit pylône à son extrémité supérieure,
- ladite embase comportant une cavité tubulaire de préférence d'axe perpendiculaire Z₁Z'₁ à ladite surface d'appui inférieure de l'embase, une partie inférieure dudit pylône étant encastrée à l'intérieur de ladite cavité tubulaire, l'encastrement étant réalisé à l'aide d'un dispositif permettant d'ajuster l'inclinaison de l'axe ZZ' dudit pylône par rapport à l'axe Z₁Z'₁ de ladite cavité tubulaire,
caractérisée en ce que ledit dispositif d'ajustement de l'inclinaison dudit pylône dans ladite embase comprend :
a) des moyens de calage indépendants intercalés entre ladite partie inférieure du pylône et ladite cavité tubulaire au niveau BB' de l'ouverture supérieure de ladite cavité tubulaire dépassant au-dessus du niveau de la mer, et
b) des moyens de centrage solidaires de ladite partie inférieure de pylône et de ladite cavité tubulaire, lesdits moyens de centrage étant situés à l'intérieur de ladite cavité tubulaire en dessous des dits moyens de calage et lesdits moyens de centrage étant aptes à maintenir en position fixe dessous ladite ouverture supérieure de la cavité tubulaire, de préférence au niveau du fond de ladite cavité tubulaire, le point d'intersection de l'axe ZZ' de ladite partie inférieure de pylône et de l'axe Z₁Z'₁ de ladite cavité tubulaire.

Ainsi, le dispositif d'encastrement et d'ajustement de la verticalité selon la présente invention permet de réaliser un encastrement du pylône rigide et fiable mécaniquement pour une durée de vie de l'installation d'au moins 20 ans. Un tel dispositif d'ajustement de la verticalité permet d'ajuster aisément et de manière très fine et parfaite la verticalité finale du pylône de l'éolienne en cours de vie de l'installation, en modifiant les cales depuis la surface.

On entend par « moyens de calage indépendants » que ceux-ci ne sont pas solidaires de ladite partie inférieure de pylône d'une part et de ladite cavité tubulaire d'autre part. On comprend que du fait que lesdits moyens de calage sont indépendants, lesdits moyens de calage peuvent être réalisés in-situ de manière à occuper l'espace entre la cavité tubulaire et la partie inférieure du pylône et ce de façon réversible, éventuellement selon des dimensions d'espacement variables entre les différentes positions autour de ladite partie inférieure du pylône, ceci afin de réaliser une inclinaison ajustable au cours du temps de l'axe ZZ' de ladite partie inférieure de pylône par rapport à l'axe Z₁Z'₁ de ladite cavité tubulaire en formant un angle dont le sommet correspond à ladite intersection entre l'axe ZZ' de ladite partie inférieure du pylône et l'axe Z₁Z'₁ de ladite cavité tubulaire.

On comprend que la valeur de l'angle au sommet 2 x β du cône d'inclinaison de l'axe ZZ' de ladite partie inférieure du pylône par rapport à l'axe Z₁Z'₁ de ladite cavité tubulaire dans laquelle ladite partie inférieure de pylône est encastrée dépend de :
- la différence de diamètre entre le diamètre de la paroi externe de ladite partie inférieure de pylône et le diamètre de la paroi interne de ladite cavité tubulaire au niveau de l'ouverture supérieure de ladite cavité tubulaire, et
- la hauteur entre ladite ouverture supérieure de ladite cavité tubulaire et ledit point d'intersection des deux axes ZZ' de ladite partie inférieure du pylône et Z₁Z'₁ respectivement dite cavité tubulaire.

Ladite cavité tubulaire forme un puits ou un fût s'élevant au-dessus de ladite structure inférieure de base de ladite embase.

On comprend que la coopération entre ledit pion de centrage et ledit orifice intérieur constitue un point d'articulation fixe qui permet que la partie inférieure de pylône puisse adopter une inclinaison dans un cône de demi angle au sommet β correspondant à l'inclinaison maximale possible de ladite partie inférieure de pylône à l'intérieur de ladite cavité tubulaire.

L'éolienne selon l'invention permet de réajuster la verticalité de son pylône, lorsque des tassements différentiels se produisent au niveau du fond de la mer, conduisant à une inclinaison de l'embase, donc à une inclinaison du pylône, par rapport à la position initiale verticale.

Selon la présente invention, il est possible de réajuster aisément le calage en cours de vie de l'installation car les moyens de calage sont indépendants, intercalés au niveau de l'ouverture supérieure de la cavité tubulaire de l'embase, et sont facilement accessibles car ils dépassent au-dessus du niveau de la mer.

D'autre part, du fait que la distance entre les points de calage et le point de centrage et d'appui inférieur corresponde à la hauteur de la cavité tubulaire et que celle-ci s'étende sur une hauteur plus importante que dans la technique antérieure, puisque l'extrémité supérieure de la cavité tubulaire arrive au-dessus du niveau de la mer, les structures constituant les moyens de calage requièrent des reprises d'effort relativement réduites.

Le mode de réalisation selon l'invention est donc doublement avantageux en ce que:
- d'une part, il permet une modification aisée de l'ajustement de la verticalité depuis la surface en cours de vie de l'installation, et
- d'autre part, la mise en oeuvre de moyens de calage requiert des reprises d'effort (en levier) relativement réduites.

De préférence, lesdits moyens de calage comprennent une pluralité de cales destructibles et/ou démontables au moins en partie, de manière à pouvoir être remplacées ou modifiées pour ajuster l'angle d'inclinaison β de l'axe ZZ' de ladite partie inférieure de pylône et l'axe Z₁Z'₁ de ladite cavité tubulaire.

De préférence encore, lesdits moyens de calage sont réalisés par une pluralité de cales entourant la paroi externe de ladite partie inférieure de pylône, de préférence régulièrement réparties autour de celle-ci, lesdites cales étant disposées sur une première plateforme périphérique renforcée entourant le bord supérieur de ladite cavité tubulaire et lesdites cales occupant tout l'espace entre des moyens de butée et une paroi externe renforcée de ladite partie inférieure de pylône positionnée juste au-dessus de ladite ouverture supérieure de la cavité de la cavité tubulaire en vis-à-vis des dits moyens de butée.

Dans une variante de réalisation, lesdites cales comprennent au moins une structure métallique mécano-soudée s'étendant de préférence sur toute la hauteur de ladite cale, ladite structure mécano-soudée étant apte à être démontée ou détruite.

On entend ici par « mécano-soudé », que la cale est réalisée à partir d'éléments en acier, tels des profilés, des plats ou des tôles de forte épaisseur soudés entre eux.

Dans une autre variante de réalisation particulier, lesdites cales sont constituées au moins en partie d'un matériau coulable et moulable in-situ dans l'espace entre lesdits moyens de butée solidaires de ladite première plateforme périphérique d'une part, et d'autre part, ladite paroi externe renforcée de ladite partie inférieure de pylône.

Avantageusement encore, lesdits moyens de centrage coopèrent avec des moyens de supportage consistant dans des éléments de structure renforcée de la partie inférieure du pylône et des éléments de structure renforcée de ladite cavité tubulaire, de préférence du fond de ladite cavité tubulaire, lesdits éléments de supportage supportant et transférant tout le poids dudit pylône et du moteur à vent sur l'embase lorsque ledit pylône est en position verticale.

On entend ici par « élément de structure renforcée » de la partie inférieure du pylône ou « paroi de fond renforcée » de la cavité tubulaire, un élément de structure ou respectivement une paroi de fond qui comprendra par exemple une épaisseur supérieure à celle de la paroi latérale tubulaire de la partie inférieure du pylône ou respectivement de la cavité tubulaire, de préférence une épaisseur d'au moins du double de l'épaisseur de la paroi latérale tubulaire de la partie inférieure du pylône ou respectivement de ladite cavité tubulaire, ainsi que, le cas échéant, des éléments de renforts localisés complémentaires.

Dans un mode préféré de réalisation :
- lesdits moyens de centrage comprennent un premier élément de centrage solidaire d'une paroi de fond de ladite cavité tubulaire, disposé au centre de celle-ci et coopérant avec un deuxième élément de centrage disposé au centre de l'extrémité inférieure de ladite partie inférieure de pylône, ledit premier élément de centrage comprenant un pion de centrage s'étendant au-dessus de ladite paroi de fond de ladite cavité tubulaire ou un orifice de centrage et coopérant avec ledit deuxième élément de centrage comprenant un orifice de centrage ou respectivement un pion de centrage s'étendant en-dessous de la dite extrémité inférieure du pylône, ledit pion de centrage étant apte à être introduit dans ledit orifice de centrage, et
- lesdits éléments de supportage comprennent un premier élément de supportage consistant dans une structure renforcée de l'extrémité inférieure de la partie inférieure du pylône autour et au-dessus dudit pion de centrage ou le cas échéant autour dudit orifice de centrage et un deuxième élément de supportage consistant dans une structure renforcée de la paroi de fond autour et dessous ledit pion de centrage ou le cas échéant autour dudit orifice de centrage.

Plus particulièrement encore, ladite partie inférieure de pylône consiste en une fiche tubulaire, de préférence en acier, comportant une partie tubulaire surmontée à son extrémité supérieure par une platine renforcée de diamètre externe supérieur à celui de ladite partie tubulaire interne de ladite fiche tubulaire, la sous-face de ladite platine renforcée étant disposée au-dessus d'une première plateforme périphérique renforcée entourant l'ouverture supérieure de la cavité tubulaire lorsque ladite fiche tubulaire est entièrement engagée à l'intérieur de ladite cavité tubulaire et qu'un dit pion de centrage et un dit orifice de centrage coopèrent, ladite platine renforcée supérieure de la fiche tubulaire constituant une bride de fixation sur laquelle est fixée une contre-bride solidaire de l'extrémité inférieure d'une partie supérieure de pylône, de préférence en acier, ladite platine renforcée supérieure de la fiche tubulaire étant apte à venir buter latéralement contre ladite première plateforme supérieure renforcée de la cavité tubulaire pour reprendre les efforts dus au moment M de la force Fₕ due au vent, ou le cas échéant, à l'inclinaison de la fiche tubulaire au sein de ladite cavité tubulaire.

Ce mode de réalisation est avantageux, car il permet de fixer à l'extrémité supérieure de ladite fiche tubulaire différents types de pylônes du commerce pouvant avoir un diamètre légèrement inférieur à celui de la platine supérieure, voire de la paroi tubulaire de la fiche tubulaire.

On entend ici par « première plateforme renforcée » de la cavité tubulaire ou « platine renforcée » de la fiche tubulaire, une platine qui comprendra par exemple une épaisseur supérieure à celle de l'épaisseur de la paroi latérale tubulaire de la cavité tubulaire ou respectivement de la fiche tubulaire ou de préférence une épaisseur au moins du double de l'épaisseur de la paroi latérale tubulaire de la cavité tubulaire ou respectivement de ladite fiche tubulaire, ainsi que, le cas échéant, des éléments de renforts localisés complémentaires.

Dans un mode de réalisation avantageux, la hauteur de ladite cavité tubulaire est au moins égale à la largeur d'une structure inférieure comportant des caissons de ballastage de ladite embase destinée à reposer ou à être ancrée au fond de la mer, au-dessus de laquelle ladite cavité tubulaire s'élève d'une hauteur h d'au moins 10 m, de préférence de 15 à 25 m pour encastrer un pylône d'une hauteur d'au moins 50 m, de préférence de 50 à 150 m.

Plus particulièrement, ladite embase est une embase gravitaire comportant une pluralité de compartiments de préférence à parois séparatives en béton, formant une structure inférieure sensiblement parallélépipédique surmontée sur sa face supérieure d'une dite cavité tubulaire centrale, de préférence en béton, ladite cavité tubulaire étant supportée par ladite structure inférieure parallélépipédique de l'embase et liaisonnée à celle-ci par des renforts de type « gousset » en partie basse de ladite cavité tubulaire, lesdits compartiments étant remplis de moyens de lestage, de préférence des granulats de matériaux de haute densité tels que des granulats de fer.

Avantageusement, ladite fiche tubulaire est remplie au moins en partie de dits granulats, de lestage des différents compartiments de ladite embase gravitaire.

Dans un mode particulier de réalisation, la surface d'appui inférieure plane de ladite embase repose sur un empierrement au fond de la mer et est inclinée d'un angle β inférieur à 5°, de préférence inférieur à 2° par rapport à l'horizontale, et l'axe ZZ' dudit pylône est en position sensiblement verticale au-dessus du niveau de la mer et incliné d'un dit angle β par rapport à l'axe Z₁Z'₁ de ladite cavité tubulaire.

Avantageusement, lesdits moyens de calage comportent des actionneurs, de préférence des vérins hydrauliques solidaires de l'ouverture supérieure de ladite cavité tubulaire et coopèrent avec la paroi externe renforcée de ladite partie inférieure de pylône, de manière à maintenir ladite partie inférieure de pylône en position verticale.

La présente invention fournit également un procédé d'ajustement de la verticalité d'un pylône d'une éolienne maritime, dans lequel une dite partie inférieure de pylône est engagée à l'intérieur d'une dite cavité tubulaire d'embase reposant sur un empierrement au fond de la mer, de telle sorte que lesdits moyens de centrage maintiennent en position fixe, de préférence au niveau central de la paroi de fond de ladite cavité tubulaire, un dit point d'intersection entre les axes ZZ' de ladite partie inférieure de pylône et Z₁Z'₁ de ladite cavité tubulaire, caractérisé en ce :
1) on installe une pluralité d'actionneurs, de préférence des vérins hydrauliques solidaires d'une première plateforme périphérique à l'extrémité supérieure de ladite cavité tubulaire arrivant au-dessus du niveau de la mer, régulièrement répartis sur ladite première plateforme périphérique autour de ladite partie inférieure de pylône et on actionne lesdits actionneurs, de préférence lesdits vérins hydrauliques, de manière à positionner l'axe ZZ' de ladite partie inférieure de pylône en position verticale, le cas échéant incliné β par rapport à l'axe Z₁Z'₁ de ladite cavité tubulaire, et
2) on réalise in situ des dits moyens de calage dans l'espace entre une paroi externe renforcée de ladite partie inférieure de pylône et des moyens de butée solidaires de ladite première plateforme périphérique à l'extrémité supérieure de ladite cavité tubulaire.

Avantageusement, dans le procédé selon l'invention, on modifie l'inclinaison β de ladite partie inférieure de pylône à l'intérieur de ladite cavité tubulaire en réalisant les étapes suivantes dans lesquelles :
1) on met en oeuvre lesdits actionneurs, de préférence des vérins hydrauliques disposés sur ladite première plateforme périphérique, de préférence régulièrement espacés autour de la partie inférieure de pylône, et on les actionne de manière à bloquer ledit pylône dans sa position actuelle, puis,
2) on démonte ou détruit au moins partiellement des dits moyens de calage correspondant à une première position d'inclinaison dudit axe ZZ' de ladite partie inférieure de pylône et l'axe Z₁Z'₁ de ladite cavité tubulaire, et
3) on actionne lesdits actionneurs, de manière à positionner l'axe ZZ' de ladite partie inférieure de pylône selon une inclinaison β différente par rapport à l'axe Z₁Z'₁ de ladite cavité tubulaire, de préférence ledit pylône étant alors en position verticale, et
4) on remplace ou modifie lesdits moyens de calage de manière à occuper tout l'espace entre la paroi externe de ladite partie inférieure de pylône en regard des dits moyens de butée solidaires de ladite première plateforme périphérique, de dimensions différentes par rapport à la position initiale, en réalisant in situ les nouveaux moyens de calage.

D'autres caractéristiques et avantages de la présente invention apparaîtront à la lumière de la description qui va suivre, qui se réfère aux dessins annexés et qui illustre sans aucun caractère limitatif des modes préférentiels de réalisation de l'invention :
- la figure 1A représente une vue de face d'une éolienne offshore montée sur une embase poids en béton selon l'invention, représentée en coupe et reposant sur le fond de la mer,
- la figure 1B une alternative de la figure 1A, dans laquelle l'embase est une structure métallique, le pylône s'étendant vers le bas, en continuité, à l'intérieur de l'embase,
- la figure 2 représente en coupe l'embase poids en béton dans le fût de laquelle on insère une fiche de réglage de la verticalité, ladite fiche venant se centrer sur un pion solidaire de ladite embase,
- la figure 3 représente en coupe la mise en place du pylône dans l'axe de la fiche, avant assemblage par boulonnage,
- la figure 4 illustre le débattement angulaire maximal β de la fiche dans le fût de l'embase,
- les figures 5A-5B-5C représentent une vue de dessus de la figure 4, illustrant le dispositif de réglage de la verticalité de l'éolienne, ladite vue de dessus étant limitée à la portion d'embase située au dessus du plan CC' de la figure 4,
- la figure 6A est une coupe en vue de côté de la partie supérieure du fût de l'embase équipée de deux vérins servant à ajuster la verticalité de l'éolienne,
- les figures 6B-6C sont des vues de dessus correspondant aux figures 5B-5C, dans lesquelles des moyens de calage permanents verrouillent la position du pylône de l'éolienne,
- les figures 7A-7B sont des vues de dessus illustrant la fabrication in situ de cales au moyen de coulis de ciment à hautes performances,
- les figures 7C-7D illustrent une variante de cales fabriquées in situ et intégrant une portion de structure mécano-soudée en acier,
- la figure 7E illustre une cale mécano-soudée en acier a coins démontable réalisée en trois partie,
- la figure 8 montre une vue en coupe verticale au niveau d'une cale 8,
- les figures 9A et 9B sont des vues de côté d'une embase poids supportant le pylône d'une éolienne sur site, en position initiale verticale (FIG. 9A) et inclinée après tassement différentiel du sol et dont le pylône est réajusté verticalement (FIG. 9B),
- la figure 10 est une vue en coupe du site d'installation, illustrant l'empierrage du fond marin de manière à créer une plateforme horizontale en vue d'installer une éolienne et son embase poids,

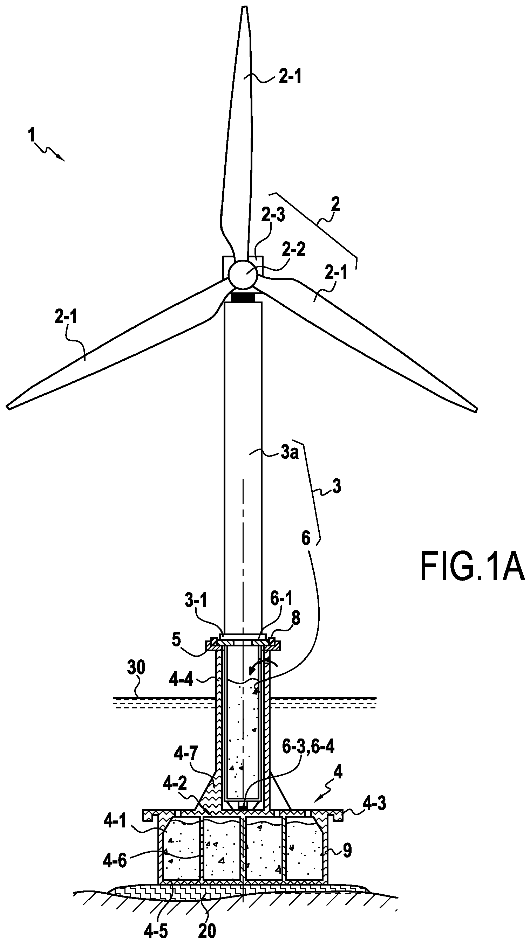

Sur la figure 1A on a représenté en vue de face une éolienne offshore 1 comportant un moteur à vent 2 comprenant une génératrice de courant 2-3, et un rotor à arbre rotatif 2-2 d'axe horizontal entraîné en rotation par ledit moteur 2 et supportant trois pales 2-1 à son extrémité. Ledit moteur 2 est installé au sommet d'un pylône 3, solidaire d'une embase 4 du type embase poids en béton, lestée après installation sur site par des granulats de minerais de fer 9 de densité supérieure à 4 contenus à l'intérieur des cloisons 4-2 de l'embase 4.

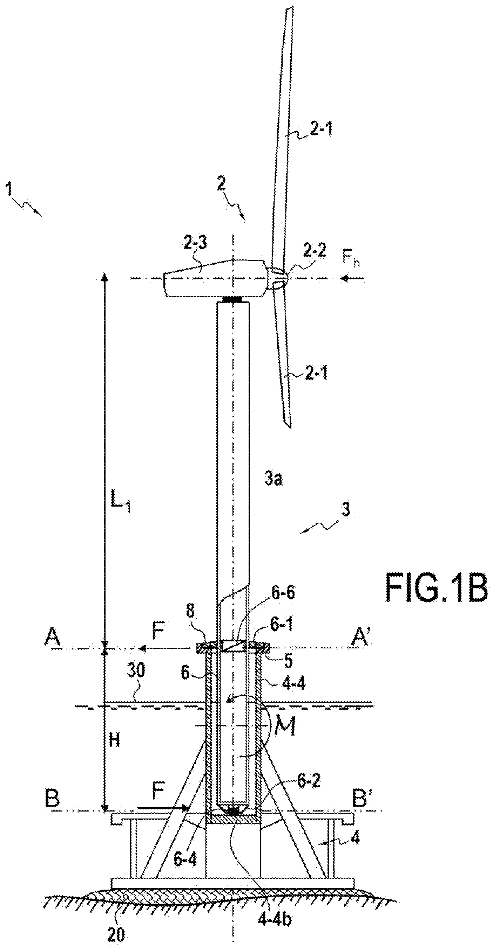

La figure 1B illustre une variante de la figure 1, en vue de côté, dans laquelle l'embase est constituée par une structure métallique renforcée, le pylône s'étendant vers le bas à l'intérieur de ladite embase. Sur cette figure, on a illustré la force Fₕ engendrée en tête de pylône par le vent au niveau du rotor lorsque la génératrice est en cours de production d'électricité. De cette force résulte un moment de renversement M qui doit être repris par l'embase. Du fait que le pylône et l'embase sont deux éléments distincts, il convient de réaliser une solidarisation efficace entre les deux dits éléments, c'est-à-dire un quasi encastrement. A cet effet, le pylône s'étend avantageusement vers le bas à l'intérieur de ladite embase et est solidarisé à ladite embase au niveau d'un pion de centrage 6-4 situé dans le plan BB', et dont le fonctionnement sera expliqué plus avant dans la description. En tête d'embase, le pylône est rigidement solidarisé à ladite embase dans le plan AA' selon des moyens qui seront détaillés plus avant dans la description. Il en résulte que le moment M crée deux forces F de sens opposé respectivement dans chacun des plans AA' et BB',

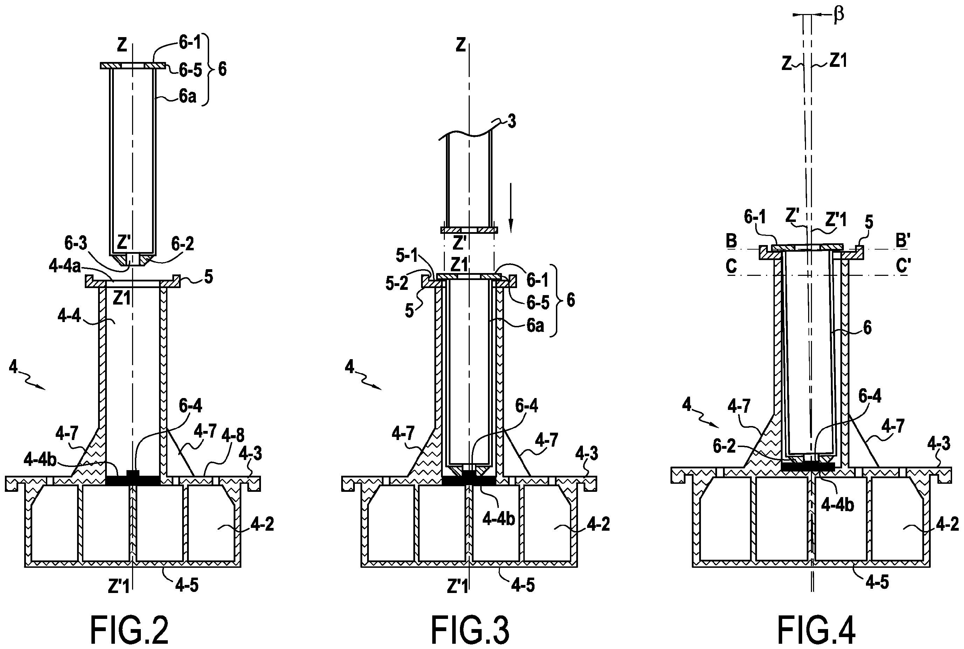

Sur les figures 1A et 2 on a représenté en coupe et en vue de côté, la structure d'une embase 4 en béton. L'embase est constituée d'une structure présentant des caissons 4-2 en partie basse destinés à être remplis de lest sous forme de granulats à forte densité 9. Elle s'étend vers le haut sous la forme d'un puits formant une cavité tubulaire 4-4 de hauteur H s'étendant jusqu'au dessus du niveau de la mer 30, ledit puits étant liaisonné à la partie basse par des renforts de type goussets 4-7 et présentant en partie haute une plateforme périphérique renforcée 5, de préférence en structure mécano-soudée, dont le fonctionnement sera expliquée plus avant dans la description ci-après de l'invention. L'intérieur du puits 4-4 est de préférence circulaire et reçoit une fiche tubulaire ou fût 6, de préférence un tube acier 6a de forte épaisseur et de diamètre extérieur correspondant de préférence à l'épaisseur et au diamètre de la partie supérieure 3a du pylône 3 de l'éolienne. La partie inférieure de la fiche tubulaire comporte un renforcement 6-2, de préférence en acier massif, présentant un alésage central interne 6-3 collaborant avec un pion de centrage 6-4 de diamètre extérieur légèrement inférieur à ce dernier et solidaire de l'embase 4 au niveau du fond renforcé 4-4b du puits 4-4, c'est-à-dire un fond présentant au moins une épaisseur supérieure à celle de la paroi latérale tubulaire du puits 4-4, ainsi que, le cas échéant, des éléments de renforts localisés complémentaires. Ainsi, lors de l'insertion de la fiche 6 dans le puits 4-4, le pied de la fiche vient se centrer sur ledit pion de centrage 6-3, comme représenté sur la figure 3. Les éléments de structure renforcée 6-2 de l'extrémité inférieure de la partie inférieure 6 du pylône 3 et la paroi de fond renforcée 4-4b de la cavité tubulaire 4-4 supporte et transfère tout le poids du pylône à l'embase 4 lorsque le pylône 3 est en position verticale, comme explicité ci-après. La tête de la fiche tubulaire 6 est solidaire d'une platine renforcée de forte épaisseur 6-1, de préférence en acier, venant se positionner à proximité du plan de la face supérieure 5-1 de ladite première plateforme périphérique renforcée 5 autour de l'ouverture supérieure 4-4a de la cavité tubulaire 4-4 arrivant au-dessus du niveau de la mer 30, par exemple à 5 cm de distance, donc sans la toucher. D'autre part, le diamètre externe de la fiche tubulaire 6 est inférieur au diamètre interne de la cavité tubulaire 4 autorisant ainsi un débattement latéral de la fiche 6 et du pylône 3 d'un angle β à l'intérieur de la cavité tubulaire 4-4, comme représenté sur la figure 4.

Ainsi, lesdites platine renforcée 6-1 et première plateforme périphérique renforcée 5 permettent de transférer à l'embase les efforts dus au moment de renversement M s'appliquant au niveau du plan AA', lorsque l'éolienne est soumise à la force Fₕ due au vent.

Sur la figure 1A, on a représenté un pylône 3 de l'éolienne constitué d'une partie supérieure 3a de pylône fixée à une partie inférieure de pylône 3 constituée d'une fiche tubulaire 6. Plus précisément, une platine 3-1 solidaire de l'extrémité inférieure de la partie supérieure 3a du pylône est fixée sur une platine supérieure 6-1 solidaire de l'extrémité supérieure de la fiche tubulaire 6.

Sur la figure 1B, on a représenté une variante de réalisation dans laquelle la fiche tubulaire 6 constitue une partie inférieure de pylône en continuité de la partie supérieure 3a et séparée de celle-ci par ladite platine 6-1 disposée au-dessus, le cas échéant venant buter latéralement sur ladite première plateforme périphérique renforcée 5 de la cavité tubulaire 4-4 de l'embase 4 arrivant au-dessus du niveau de la mer 30.

Plus précisément, sur la figure 1B, on a représenté en coupe partielle une éolienne dont le pylône s'étend vers le bas jusqu'à atteindre le niveau du plan BB' de l'embase. La partie basse dudit pylône comporte ledit renforcement 6-2 présentant un alésage interne 6-3 collaborant avec le pion de centrage 6-4 solidaire de l'embase s'élevant au-dessus et au centre de la paroi de fond renforcée 4-4b de la cavité tubulaire 4-4. Ainsi, la partie inférieure 6 du pylône 3 comprise entre les plans supérieurs AA' et BB' joue le rôle de fiche et de plus, au niveau du plan AA', le pylône est renforcé localement par une virole externe faisant office de platine 6-1 disposée au-dessus de la première plateforme périphérique 5 de la cavité tubulaire 4-4 et le cas échéant par un renfort interne 6-6, l'ensemble de la platine renforcée 6-1, renfort intérieur 6-10 et première plateforme renforcée 5 jouant le rôle de transmission des efforts dus au moment M de la force Fₕ due au vent, vers l'embase, ou en cas d'inclinaison du pylône comme décrit ci-après.

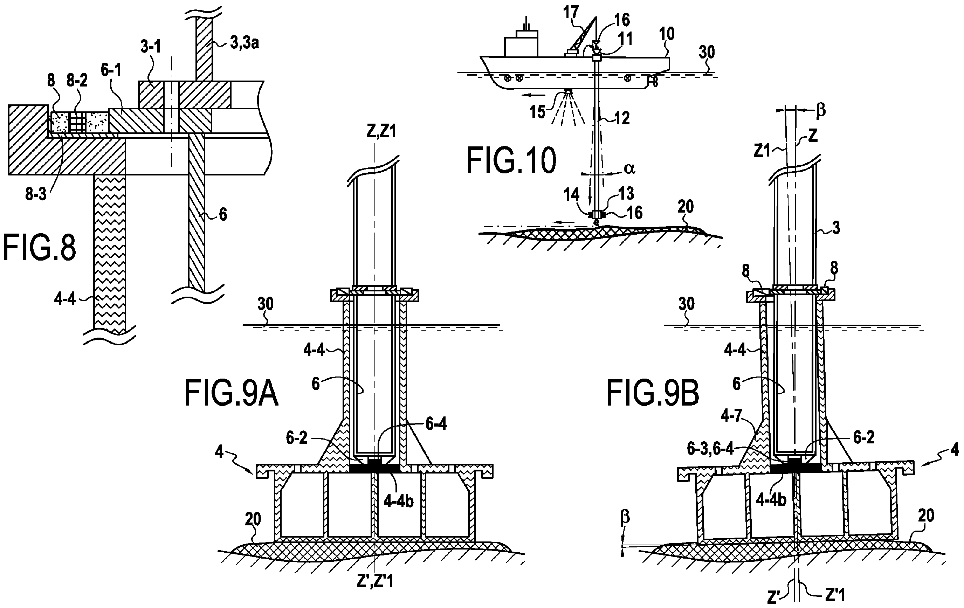

Le site d'installation est en général préparé, de manière connue, par empierrement 20 contrôlé depuis un navire de surface comme illustré sur la figure 10. A cet effet, un navire 10 de type vraquier, de préférence à positionnement dynamique est équipe sur le côté d'une trémie 11 reliée à une conduite légère 12 s'étendant vers le bas, 1 à 2m au dessus du fond marin. Un dispositif 13 équipé de propulseurs latéraux 14 et l'une caméra vidéo, non représenté, permet de déplacer en toutes directions, sur quelques mètres, l'extrémité inférieure de ladite conduite 12, de manière à ajuster précisément la zone vers laquelle les granulats 16 sont dirigés. Lesdits granulats sont chargés dans la trémie 11 par la grue 17, puis descendent le long de la conduite 12, pour se poser enfin sur la fondation 20. Le processus d'empierrement est contrôlé à bord du bateau par un sonar 15 à balayage latéral, connu de l'homme de l'art, et qui donne une représentation très précise de la surface empierrée. Avec de tels moyens il est possible de créer des plateformes empierrées de plusieurs mètres d'épaisseur sur des surfaces dépassant largement 1000m², et dont les variations maximales du niveau supérieur sont comprises entre 0.2m et 0.5m. On peut ainsi considérer que l'embase installée sur la fondation empierrée est sensiblement horizontale, mais l'installation proprement dite de l'embase, ainsi que son ballastage avec des granulats lourds ne manque pas de créer un léger enfoncement qui peut être différent entre la partie droite et la partie gauche. Il en résulte ainsi que l'axe ZZ de l'embase n'est alors plus exactement vertical, ce qui est préjudiciable au bon fonctionnement dans la durée de l'éolienne, et plus particulièrement au niveau de la tourelle d'orientation de la tête de rotor, vis-à-vis du pylône.

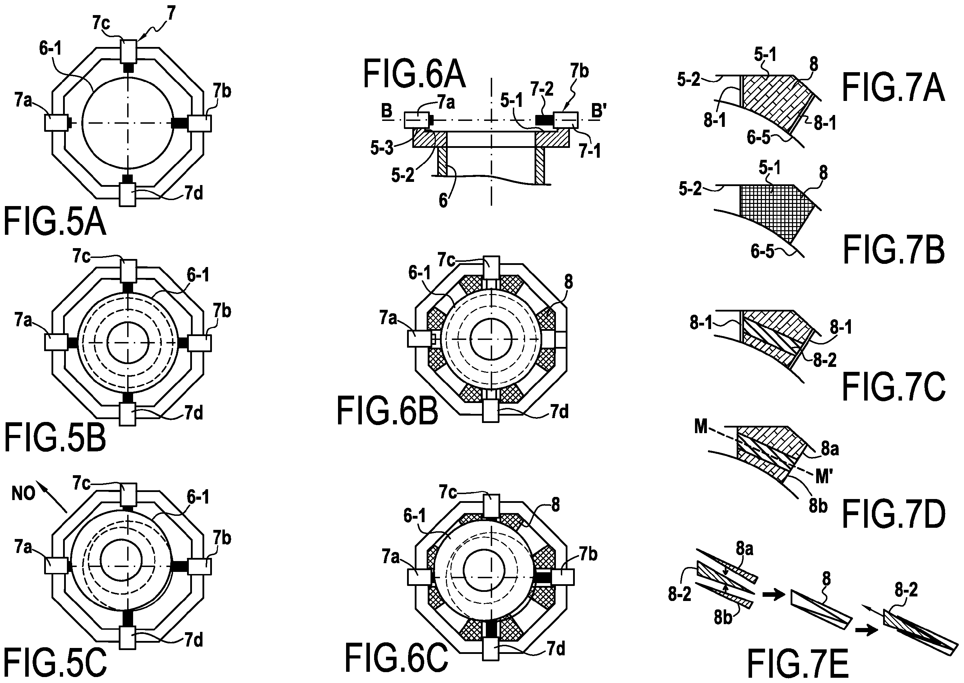

Ainsi, l'embase 4, une fois installée sur site comme représenté sur la figure 1, présentant un angle β donné, par exemple 0.5 degré par rapport à la verticale, il convient de finaliser l'installation en remettant le pylône de l'éolienne parfaitement dans l'axe vertical. A cet effet, comme représenté sur les figures 5A-5B-5C, on installe avantageusement une pluralité d'actionneurs, de préférence des vérins hydrauliques 7 solidaires du couronnement 5-3 de la plateforme renforcée 5, de préférence installés par paires, symétriquement par rapport à l'axe ZZ de l'éolienne. Le corps 7-1 du vérin est solidaire du couronnement 5-3 et la tige 7-2 dudit vérin vient en contact avec la paroi latérale de la platine de forte épaisseur 6-1.

Sur la figure 5A, la fiche tubulaire 6 n'est pas encore installée, et les vérins 7c-7d sont à mi-course. La tige du vérin 7a est complètement rentrée, alors que celle du vérin 7b est complètement sortie. On comprend alors, comme détaillé sur la figure 5C, qu'en augmentant (réduisant) la longueur de tige d'un vérin, on fait pencher la fiche tubulaire 6, donc l'ensemble de l'éolienne, dans la direction de ladite augmentation de longueur : bien sûr, on compense la longueur du vérin opposé en réduisant (augmentant) sa longueur d'une manière sensiblement identique. Ainsi sur la figure 5C on sort les tiges des vérins 7b-7d et l'on rétracte les tiges des vérins opposés 7a-7c, pour obtenir un basculement du pylône dans la direction Nord-Ouest d'un angle correspondant sensiblement à l'angle maximal β de la figure 4.

Sur la figure 5B on a représenté le pylône de l'éolienne dans l'axe du puits de l'embase, l'ensemble étant maintenu en position par les seuls vérins précédemment décrits.

La figure 6A est une coupe en vue de côté relative à la figure 5A détaillant la position des vérins 7a-7b solidaires du couronnement 5-3 de la plateforme renforcée 5.

Lorsque la verticalité de l'axe ZZ de l'éolienne a été ajustée par ajustement de l'inclinaison de l'axe ZZ' du pylône 3 par rapport à l'axe Z₁Z'₁ de la cavité tubulaire 4-4 de l'embase 4, on dispose avantageusement des moyens de calage permanents, de manière à ce que les efforts latéraux de renversement, dus au vent ou à la tempête sur l'éolienne et son pylône, soient transmis par la platine renforcée 6-1 à ladite première plateforme renforcée 5, puis à l'embase proprement dite. Durant toute cette phase d'installation des moyens de calage, les vérins sont verrouillés en position, de manière à ce que le pylône ne bouge absolument pas.

Dans une version préférée de l'invention, les cales 8 sont simplement coulées dans un moule simplifié constitué de parois en bois, tel un coffrage de maçonnerie, comme détaillé sur les figures 7A-7B-7C-7D relatives à la fabrication de la cale 8 de la figure 6C.

Sur les figures 7A à 7D, on a représenté en plan et en vue de dessus la paroi verticale intérieure 5-2 du couronnement 5-3 de la plateforme renforcée 5, ainsi que la paroi extérieure 6-5 de la platine de forte épaisseur 6-1 située en tête de la fiche 6. On installe un fond de coffrage 8-3, de préférence en contact direct avec la partie supérieure 5-1 de ladite première plateforme renforcée 5, ainsi que deux éléments latéraux de coffrage 8-1 reliant la paroi verticale intérieure 5-2 du couronnement 5-3 et la paroi extérieure 6-5 de la platine de forte épaisseur 6-1, ainsi que le fond de coffrage, créant ainsi une cuvette de hauteur sensiblement égale à la hauteur desdites parois 5-2 et 6-5. On coule alors un coulis de matériau tel que du béton dans le volume de la cuvette ainsi formée, de manière à constituer une cale 8, moulée in situ, et ne présentant aucun jeu avec les parois verticales, respectivement intérieure 5-2 du couronnement 5-3 de ladite première plateforme renforcée 5, et extérieure 6-5 de la platine de forte épaisseur 6-1. En réalisant de la même manière chacune des autres cales, de préférence uniformément réparties à la périphérie de la platine de forte épaisseur 6-5 de la fiche 6, ladite fiche, donc le pylône 3 de l'éolienne, se trouve encastré dans son embase. De par cet ajustement effectué en fin d'installation, grâce au dispositif selon l'invention, l'éolienne est parfaitement verticale, bien que son embase ait été positionnée avec une incertitude quant à la verticalité de son axe ZZ, lors de l'installation.

Pour assurer un calage optimal, on utilise avantageusement un coulis sans retrait à très hautes performances, de type coulis de ciment, tel l'EMBECO 880 de la société BASF, qui présente une excellente résistance à la compression dès 24 heures après sa mise en place par coulée et quasiment aucun fluage ni retrait dans le temps.

Lorsque la réticulation des cales est suffisante, soit on laisse les vérins en place, en position verrouillée comme représenté sur la figure 6B (vérins 7c et 7d), soit on les laisse en position rétractée (vérin 7a), soit on les enlève comme illustré pour le vérin 7b absent.

Au cours de l'exploitation de l'éolienne qui peut durer 20-25 ans voire plus, on risque de voir apparaître des tassements différentiels du sol sous l'embase de l'éolienne, ce qui induit alors un désaxage du pylône de l'éolienne par rapport à la verticale. Pour le remettre en position verticale, on effectue alors avantageusement, grâce au dispositif selon l'invention, une opération de remise en position verticale qui s'effectue alors selon les étapes suivantes :
1) on repositionne les vérins 7 sur le couronnement 5-3 de ladite première plateforme renforcée 5, puis,
2) on sort les tiges 7-2 desdits vérins 7,7-a-7d pour qu'ils viennent en contact ave la platine de forte épaisseur 6-5 de la fiche 6, puis
3) on verrouille les vérins en position d'extension de manière à maintenir fermement le pylône, puis
4) on démonte, ou détruit chacune des cales 8, puis
5) on réajuste la verticalité de l'éolienne en jouant sur les longueurs de tige 7-2 sortie de chacun des vérins, comme expliqué précédemment, puis
6) on réinstalle un nouveau jeu de cales, comme expliqué précédemment.

Le démontage des cales 8 telles que définies précédemment en référence aux figures 7A et 7B, peut présenter des difficultés, en raison de la dureté extrême dudit coulis une fois réticulé. Ainsi, dans une version préférée détaillée sur les figures 7C-7D, dans le même coffrage que celui de la figure 7A, on installe avantageusement avant la mise en place du coulis, une structure intermédiaire 8-2 sécable, par exemple en structure métallique mécano-soudée, s'étendant sur toute la hauteur de ladite cuvette, et reliant les éléments latéraux de coffrage 8-1, de manière à délimiter deux cales complémentaires 8a et 8b, indépendantes l'une de l'autre. Ainsi, les efforts horizontaux passent depuis ladite platine renforcée 6-1 vers la demi-cale 8b, puis vers structure intermédiaire 8-2, puis vers la demi-cale 8a et enfin vers la paroi latérale intérieure 5-2 du couronnement de ladite première plateforme renforcée 5. Ainsi, en cas de nécessité de réglage ultérieur de la verticalité de l'éolienne, il suffit de couper ladite structure intermédiaire 8-2 selon MM', par exemple à l'aide d'un chalumeau oxycoupeur, ce qui est en général facile et rapide à exécuter, de manière à libérer les contraintes dans les cales, permettant ainsi de les démonter et de les extraire facilement.

Sur la figure 7E, on a représenté une cale constituée de trois pièces en forme de coin 8a, 8-2 et 8b montées de façon autobloquante, qui une fois assemblées entre elles donnent une forme identique à la cale mécano-soudée 8. Lors du démontage il suffit alors d'extraire la cale intérieure par translation axiale au moyen de dispositifs appropriés de type extracteur à vérin hydraulique de forte puissance.

D'autres moyens de calages démontables peuvent être envisagés, mais dans tous les cas de figure on utilisera avantageusement, en complément, le procédé de moulage in situ avec un coulis, décrit précédemment, ledit procédé de moulage in situ étant mis en oeuvre au niveau de l'interface entre la cale préfabriquée, et d'une part la paroi latérale 6-5 de ladite platine renforcée de forte épaisseur 6-1, et d'autre part la paroi intérieure 5-2 du couronnement de ladite première plateforme renforcée 5.

Le dispositif selon l'invention décrit précédemment en référence aux figures 1A, 2, 3, 4 et 9 s'applique à des éoliennes conventionnelles dont l'embase est équipée d'une bride de forte épaisseur assemblée par soudage ou par boulonnage sur son assise de fondation.

Pour la clarté des explications et des dessins, les éléments tubulaires relatifs au pylône et à la fiche ont été représentés sous une forme circulaire, et la plateforme renforcée en tête d'embase a été représente sous une forme polygonale, mais toute forme polygonale, circulaire ou ellipsoïdale pour ces divers éléments peut être envisagée. On prendra cependant soin, dans le cas de formes circulaires, de prévoir des cales capables de reprendre des efforts de torsion selon l'axe vertical ZZ, ce qui peut être réalisé simplement dans le cas de cales coulées in situ, en incorporant dans les parois verticales 5-2 et 6-5 des protubérances, par exemple des morceaux de profilés en acier soudés, qui une fois pris dans le coulis jouent alors le rôle de connecteur et assurent de ce fait une rigidité en torsion de l'ensemble selon l'axe ZZ.

A titre illustratif, l'éolienne selon l'invention comprend un pylône d'une hauteur de 5 à 150 m, de préférence au moins 100 m de hauteur, dont la paroi tubulaire présente un diamètre de plus de 2 à 10 m, plus particulièrement de 6 à 7 m. L'embase comporte une structure parallélépipédique 4-1 à section carrée d'au moins 20 m, de préférence d'au moins 30 m de côté et 10 m de hauteur cloisonnée par des cloisons 4-6 de 20 à 30 cm d'épaisseur en béton, formée des compartiments 4-2 séparés par des cloisons verticales 4-6. La cavité tubulaire 4-4 s'élève à une hauteur H au-dessus de la face supérieure 4-8 de la structure parallélépipédique 4-1 de l'embase 4, sensiblement en son centre d'une hauteur H de 15 à 25 m. Le diamètre interne de la cavité tubulaire 4-4 est supérieur au diamètre externe de la fiche tubulaire 6 et du pylône 3 généralement d'au moins 1 m, de préférence 2 m, ces dimensions permettent une articulation en rotation de la fiche tubulaire fixée à son extrémité inférieure au niveau du pion de centrage 6-4 dans un cône de demi angle au sommet β pouvant aller jusqu'à 2°, de préférence de 1° à 1,5°. Le pion de centrage 6-4 est constitué d'un plot cylindrique de diamètre d'au moins 0.5 m à 1 m, s'élevant sur une hauteur d'au moins 0.5 m à 1 m également. L'embase repose ici à une profondeur de 20 à 30 m, de sorte que ladite cavité tubulaire dépasse d'environ 5 m au-dessus du niveau de la mer 30.

A titre d'exemple, l'éolienne offshore est constituée d'un moteur générateur de 300 à 500 T et d'un pylône d'environ 6 m de diamètre et environ 90 à 120 m de hauteur, pesant environ 300 à 400 T.

Cette structure d'encastrement permet de reprendre des forces Fₕ de plus de 100 T, voire 200 T, qui créent un moment de renversement M, se décomposant alors en deux forces F de sens opposés respectivement dans chacun des plan AA' et BB' d'au moins 1 000 à 2 000T.

Dans la présente description, on a décrit un pion de centrage 6-4 mâle solidaire du fond de la cavité tubulaire de l'embase, collaborant avec un alésage central interne 6-3 femelle d'un renforcement 6-2 situé au niveau inférieur de la fiche tubulaire 6, mais on reste dans l'esprit de l'invention si les dits éléments sont inversés, c'est à dire que le pion mâle est solidaire dudit renforcement 6-2 de la fiche tubulaire, et l'alésage femelle est intégré à un renfort solidaire du fond de la cavité tubulaire de l'embase, les deux éléments collaborant alors de manière identique.

## Revendications

1. Eolienne maritime (1) reposant lors du montage au fond de la mer comportant :
- une embase (4), comprenant une surface d'appui inférieure (4-5) qui, lors du montage de l'éolienne, est en appui sur le sol au fond de la mer, et
- un pylône (3) supportée par ladite embase, dont l'extrémité inférieure est de préférence encastrée dans ladite embase (4), et
- un moteur à vent (2) supporté par ledit pylône à son extrémité supérieure comprenant un arbre rotatif (2-2) d'axe horizontal entraîné en rotation par un moteur et supportant une pluralité de pales (2-1) et ledit moteur à vent étant accouplé à une génératrice d'électricité (2-3), celle-ci étant de préférence également supportée par ledit pylône à son extrémité supérieure,
- ladite embase (4) comportant une cavité tubulaire (4-4) de préférence d'axe perpendiculaire (Z1Z'1) à ladite surface d'appui inférieure de l'embase, une partie inférieure (6) dudit pylône (3) étant encastrée à l'intérieur de ladite cavité tubulaire (4-4), l'encastrement étant réalisé à l'aide d'un dispositif permettant d'ajuster l'inclinaison de l'axe (ZZ') dudit pylône (3,6) par rapport à l'axe (Z1Z'1) de ladite cavité tubulaire,
ledit dispositif d'ajustement de l'inclinaison dudit pylône dans ladite embase comprenant :
a) des moyens de calage (8) indépendants intercalés entre ladite partie inférieure du pylône (6) et ladite cavité tubulaire (4-4) au niveau (BB') de l'ouverture supérieure (4-4a) de ladite cavité tubulaire dépassant, lors du montage de l'éolienne, au-dessus du niveau de la mer (30), et
b) des moyens de centrage (6-3,6-4) solidaires de ladite partie inférieure de pylône (6) et de ladite cavité tubulaire, lesdits moyens de centrage étant situés à l'intérieur de ladite cavité tubulaire en dessous des dits moyens de calage et lesdits moyens de centrage comprenant un premier élément de centrage solidaire d'une paroi de fond (4-4b) de ladite cavité tubulaire, disposé au centre de celle-ci et coopérant avec un deuxième élément de centrage disposé au centre de l'extrémité inférieure (6-2) de ladite partie inférieure (6) de pylône, lesdits moyens de centrage étant aptes à maintenir en position fixe au niveau du fond (4-4b) de ladite cavité tubulaire, le point d'intersection de l'axe (ZZ') de ladite partie inférieure de pylône (6) et de l'axe (Z1Z'1) de ladite cavité tubulaire (4).

2. Eolienne maritime selon la revendication 1, **caractérisée en ce que** lesdits moyens de calage comprennent une pluralité de cales (8) destructibles et/ou démontables au moins en partie, de manière à pouvoir être remplacées ou modifiées pour ajuster l'angle d'inclinaison β de l'axe (ZZ') de ladite partie inférieure de pylône et l'axe (Z₁Z'₁) de ladite cavité tubulaire.

3. Eolienne maritime (1) selon l'une des revendications 1 ou 2, **caractérisée en ce que** lesdits moyens de calage sont réalisés par une pluralité de cales (8) entourant la paroi externe de ladite partie inférieure de pylône, de préférence régulièrement réparties autour de celle-ci, lesdites cales (8) étant disposées sur une première plateforme périphérique renforcée (5) entourant le bord supérieur de ladite cavité tubulaire et lesdites cales occupant tout l'espace entre des moyens de butée (5-2) et une paroi externe renforcée (6-5) de ladite partie inférieure de pylône positionnée juste au-dessus de ladite ouverture supérieure (4-4a) de la cavité tubulaire en vis-à-vis des dits moyens de butée (5-2).

4. Eolienne maritime (1) selon la revendication 2 ou 3, **caractérisée en ce que** lesdites cales comprennent au moins une structure métallique mécano-soudée s'étendant de préférence sur toute la hauteur de ladite cale, ladite structure mécano-soudée étant apte à être démontée ou détruite.

5. Eolienne maritime (1) selon la revendication 2 ou 3, **caractérisée en ce que** lesdites cales sont constituées au moins en partie d'un matériau coulable et moulable *in-situ* dans l'espace entre lesdits moyens de butée (5-2) solidaires de ladite première plateforme périphérique d'une part, et d'autre part, ladite paroi externe renforcée (6-5) de ladite partie inférieure de pylône.

6. Eolienne maritime selon l'une des revendications 1 à 5, **caractérisée en ce que** lesdits moyens de centrage coopèrent avec des moyens de supportage consistant dans des éléments de structure renforcée (6-2) de la partie inférieure (6) du pylône (3) et des éléments de structure renforcée du fond (4-4b) de ladite cavité tubulaire (4), lesdits éléments de supportage supportant et transférant tout le poids dudit pylône (3) et du moteur à vent (2) sur l'embase (4) lorsque ledit pylône est en position verticale.

7. Eolienne maritime selon la revendication 6, **caractérisée en ce que** :
- ledit premier élément de centrage comprend un pion de centrage (6-4) s'étendant au-dessus de ladite paroi de fond (4-4b) de ladite cavité tubulaire ou un orifice de centrage (6-3) et coopérant avec ledit deuxième élément de centrage comprenant un orifice de centrage ou respectivement un pion de centrage s'étendant en-dessous de la dite extrémité inférieure (6-2) du pylône, ledit pion de centrage (6-4) étant apte à être introduit dans ledit orifice de centrage (6-3), et
- lesdits éléments de supportage comprennent un premier élément de supportage consistant dans une structure renforcée de l'extrémité inférieure de la partie inférieure (6) du pylône (3) autour et au-dessus dudit pion de centrage ou le cas échéant autour dudit orifice de centrage et un deuxième élément de supportage consistant dans une structure renforcée de la paroi de fond (4-4b) autour et dessous ledit pion de centrage ou le cas échéant autour dudit orifice de centrage.

8. Eolienne maritime (1) selon la revendication 6 ou 7, **caractérisée en ce que** ladite partie inférieure de pylône consiste en une fiche tubulaire (6), de préférence en acier, comportant une partie tubulaire (6a) surmontée à son extrémité supérieure par une platine renforcée (6-1) de diamètre externe supérieur à celui de ladite partie tubulaire interne (6a) de ladite fiche tubulaire (6), la sous-face de ladite platine renforcée (6-1) étant disposée au-dessus d'une première plateforme périphérique renforcée (5) entourant l'ouverture supérieure (4-4a) de la cavité tubulaire (4) lorsque ladite fiche tubulaire (6) est entièrement engagée à l'intérieur de ladite cavité tubulaire (4) et qu'un dit pion de centrage (6-4) et un dit orifice de centrage (6-3) coopèrent, ladite platine renforcée supérieure (6-1) de la fiche tubulaire (6) constituant une bride de fixation sur laquelle est fixée une contre-bride (3-1) solidaire de l'extrémité inférieure d'une partie supérieure de pylône (3a), de préférence en acier, ladite platine renforcée supérieure (6-1) de la fiche tubulaire (6) étant apte à venir buter latéralement contre ladite première plateforme supérieure renforcée (5) de la cavité tubulaire (4) pour reprendre les efforts dus au moment (M) de la force (Fₕ) due au vent, ou le cas échéant, à l'inclinaison de la fiche tubulaire (6) au sein de ladite cavité tubulaire (4).

9. Eolienne maritime selon l'une des revendications 1 à 8, **caractérisée en ce que** la hauteur de ladite cavité tubulaire (4-4) est au moins égale à la largeur d'une structure inférieure (4-1) comportant des caissons de ballastage (4-2) de ladite embase destinée à reposer ou à être ancrée au fond de la mer, au-dessus de laquelle ladite cavité tubulaire s'élève d'une hauteur (H) d'au moins 10 m, de préférence de 15 à 25 m pour encastrer un pylône d'une hauteur d'au moins 50 m, de préférence de 50 à 150 m.

10. Eolienne maritime (1) selon l'une des revendications 1 à 9, **caractérisée en ce que** ladite embase est une embase gravitaire comportant une pluralité de compartiments (4-2) de préférence à parois séparatives en béton, formant une structure inférieure (4-1) sensiblement parallélépipédique surmontée sur sa face supérieure d'une dite cavité tubulaire (4-4) centrale, de préférence en béton, ladite cavité tubulaire étant supportée par ladite structure inférieure (4-1) parallélépipédique de l'embase et liaisonnée à celle-ci par des renforts de type « gousset » (4-7) en partie basse de ladite cavité tubulaire, lesdits compartiments (4-2) étant remplis de moyens de lestage, de préférence des granulats de matériaux de haute densité tels que des granulats de fer (9).

11. Eolienne maritime (1) selon les revendications 9 et 10, **caractérisée en ce que** ladite fiche tubulaire (6) est remplie au moins en partie de dits granulats (9), de lestage des différents compartiments (4-2) de ladite embase gravitaire.

12. Eolienne maritime (1) selon l'une des revendications précédentes, **caractérisée en ce que** la surface d'appui inférieure plane (4-5) de ladite embase repose sur un empierrement (20) au fond de la mer et est inclinée d'un angle β inférieur à 5°, de préférence inférieur à 2°, par rapport à l'horizontale et l'axe (ZZ') dudit pylône (3) est en position sensiblement verticale au-dessus du niveau de la mer (30) et incliné d'un dit angle β par rapport à l'axe (Z₁Z'₁) de ladite cavité tubulaire.

13. Eolienne maritime (1) selon l'une des revendications 1 à 12, **caractérisée en ce que** lesdits moyens de calage comportent des actionneurs, de préférence des vérins hydrauliques (7,7a-7d) solidaires de l'ouverture supérieure (4-4a) de ladite cavité tubulaire (4-4) et coopèrent avec la paroi externe renforcée (6-5) de ladite partie inférieure (6) de pylône, de manière à maintenir ladite partie inférieure (6) de pylône en position verticale.

14. Procédé d'ajustement de la verticalité d'un pylône (3) d'une éolienne maritime (1) selon l'une des revendications 1 à 13, dans lequel une dite partie inférieure de pylône (6) est engagée à l'intérieur d'une dite cavité tubulaire (4-4) d'embase (4) reposant sur un empierrement au fond de la mer (20), de telle sorte que lesdits moyens de centrage maintiennent en position fixe, au niveau central de la paroi de fond (4-4b) de ladite cavité tubulaire, un dit point d'intersection entre les axes (ZZ') de ladite partie inférieure de pylône et (Z₁Z'₁) de ladite cavité tubulaire, **caractérisé en ce que** :
1) on installe une pluralité d'actionneurs, de préférence des vérins hydrauliques (7,7a-7d) solidaires d'une première plateforme périphérique (5) à l'extrémité supérieure de ladite cavité tubulaire dépassant au-dessus du niveau de la mer (30), de préférence régulièrement répartis sur ladite première plateforme périphérique autour de ladite partie inférieure (6) de pylône et on actionne lesdits actionneurs, de préférence lesdits vérins hydrauliques (7), de manière à positionner l'axe (ZZ') de ladite partie inférieure (6) de pylône en position verticale, le cas échéant incliné β par rapport à l'axe (Z1Z'1) de ladite cavité tubulaire, et
2) on réalise in situ des dits moyens de calage (8) dans l'espace entre une paroi externe renforcée (6-5) de ladite partie inférieure de pylône (6) et des moyens de butée (5-2) solidaires de ladite première plateforme périphérique (5) à l'extrémité supérieure de ladite cavité tubulaire (4).

15. Procédé selon la revendication précédente, **caractérisé en ce que** l'on modifie l'inclinaison β de ladite partie inférieure (6) de pylône à l'intérieur de ladite cavité tubulaire en réalisant les étapes suivantes dans lesquelles :
1) on met en oeuvre lesdits actionneurs, de préférence des vérins hydrauliques disposés sur ladite première plateforme périphérique, de préférence régulièrement espacés autour de la partie inférieure (6) de pylône, et on les actionne de manière à bloquer ledit pylône dans sa position actuelle, puis,
2) on démonte ou détruit au moins partiellement des dits moyens de calage (8) correspondant à une première position d'inclinaison dudit axe (ZZ') de ladite partie inférieure (6) de pylône et l'axe (Z1Z'1) de ladite cavité tubulaire, et
3) on actionne lesdits actionneurs, de manière à positionner l'axe (ZZ') de ladite partie inférieure de pylône selon une inclinaison β différente par rapport à l'axe (Z1Z'1) de ladite cavité tubulaire, de préférence ledit pylône étant alors en position verticale, et
4) on remplace ou modifie lesdits moyens de calage de manière à occuper tout l'espace entre la paroi externe de ladite partie inférieure de pylône en regard des dits moyens de butée (5-2) solidaires de ladite première plateforme périphérique, de dimensions différentes par rapport à la position initiale, en réalisant *in situ* les nouveaux moyens de calage.

## Patentansprüche

1. Offshore-Windkraftanlage (1), die während der Montage auf dem Meeresgrund ruht, umfassend:
- einen Sockel (4), der eine untere Auflagefläche (4-5) umfasst, welche während der Montage der Windkraftanlage auf dem Boden am Meeresgrund in Anlage ist, und
- einen durch den Sockel getragenen Mast (3), dessen unteres Ende vorzugsweise in den Sockel (4) eingelassen ist, und
- einen durch den Mast an dessen oberen Ende getragenen Windmotor (2), der eine umlaufende Welle (2-2) mit horizontaler Achse umfasst, welche durch einen Motor drehangetrieben wird und eine Vielzahl von Blättern (2-1) trägt, und wobei der Windmotor mit einem Stromerzeuger (2-3) gekoppelt ist, wobei dieser vorzugsweise ebenfalls durch den Mast an dessen oberen Ende getragen ist,
- wobei der Sockel (4) einen rohrförmigen Hohlraum (4-4) vorzugsweise mit zu der unteren Auflagefläche des Sockels senkrechter Achse (Z₁Z'₁) umfasst, wobei ein unterer Teil (6) des Mastes (3) innerhalb des rohrförmigen Hohlraums (4-4) eingelassen ist, wobei das Einlassen mit Hilfe einer Vorrichtung vollzogen wird, die ermöglicht, die Neigung der Achse (ZZ') des Mastes (3, 6) gegenüber der Achse (Z₁Z'₁) des rohrförmigen Hohlraums einzustellen,
wobei die Vorrichtung zum Einstellen der Neigung des Mastes in dem Sockel umfasst:
a) unabhängige Festkeilmittel (8), die zwischen dem unteren Teil des Mastes (6) und dem rohrförmigen Hohlraum (4-4) im Bereich (BB') der oberen Öffnung (4-4a) des rohrförmigen Hohlraums, welche während der Montage der Windkraftanlage oberhalb des Meeresspiegels (30) übersteht, eingesetzt sind,
b) Zentriermittel (6-3, 6-4), die mit dem unteren Mastteil (6) und dem rohrförmigen Hohlraum fest verbunden sind, wobei die Zentriermittel innerhalb des rohrförmigen Hohlraums unterhalb der Festkeilmittel gelegen sind, und wobei die Zentriermittel ein erstes Zentrierelement umfassen, das mit einer Bodenwand (4-4b) des rohrförmigen Hohlraums fest verbunden, in deren Mitte angeordnet ist und mit einem zweiten Zentrierelement, welches in der Mitte des unteren Endes (6-2) des unteren Mastteils (6) angeordnet ist, zusammenwirkt, wobei die Zentriermittel geeignet sind, den Schnittpunkt der Achse (ZZ') des unteren Mastteils (6) und der Achse (Z₁Z'₁) des rohrförmigen Hohlraums (4) in fester Position im Bereich des Bodens (4-4b) des rohrförmigen Hohlraums zu halten.

2. Offshore-Windkraftanlage nach Anspruch 1, **dadurch gekennzeichnet, dass** die Festkeilmittel eine Vielzahl von Keilen (8) umfassen, die wenigstens teilweise zerstörbar und/oder demontierbar sind, um ersetzt oder verändert werden zu können, um den Neigungswinkel β der Achse (ZZ') des unteren Mastteils und der Achse (Z₁Z'₁) des rohrförmigen Hohlraums einzustellen.

3. Offshore-Windkraftanlage (1) nach einem der Ansprüche 1 oder 2, **dadurch gekennzeichnet, dass** die Festkeilmittel durch eine Vielzahl von Keilen (8), welche die Außenwand des unteren Mastteils umgeben, vorzugsweise um diesen herum gleichmäßig verteilt sind, ausgebildet sind, wobei die Keile (8) auf einer ersten verstärkten Umfangsplattform (5), welche den oberen Rand des rohrförmigen Hohlraums umgibt, angeordnet sind, und wobei die Keile den gesamten Raum zwischen Anschlagmitteln (5-2) und einer verstärkten Außenwand (6-5) des unteren Mastteils, die genau oberhalb der oberen Öffnung (4-4a) des rohrförmigen Hohlraums gegenüber den Anschlagmitteln (5-2) positioniert ist, einnehmen.

4. Offshore-Windkraftanlage (1) nach Anspruch 2 oder 3, **dadurch gekennzeichnet, dass** die Keile wenigstens eine mechanisch-geschweißte Metallstruktur, die sich vorzugsweise über die gesamte Höhe des Keils erstreckt, umfassen, wobei die mechanisch-geschweißte Struktur geeignet ist, demontiert oder zerstört zu werden.

5. Offshore-Windkraftanlage (1) nach Anspruch 2 oder 3, **dadurch gekennzeichnet, dass** die Keile wenigstens teilweise aus einem Material gebildet sind, das an Ort und Stelle in den bzw. dem Raum zwischen den mit der ersten Umfangsplattform fest verbundenen Anschlagmitteln (5-2) einerseits und der verstärkten Außenwand (6-5) des unteren Mastteils andererseits gieß- und formbar ist.

6. Offshore-Windkraftanlage nach einem der Ansprüche 1 bis 5, **dadurch gekennzeichnet, dass** die Zentriermittel mit Tragmitteln zusammenwirken, die aus Elementen mit verstärkter Struktur (6-2) des unteren Teils (6) des Mastes (3) und aus Elementen mit verstärkter Struktur des Bodens (4-4b) des rohrförmigen Hohlraums (4) bestehen, wobei die Tragelemente das gesamte Gewicht des Mastes (3) und des Windmotors (2) auf dem Sockel (4) tragen und übertragen, wenn sich der Mast in vertikaler Position befindet.

7. Offshore-Windkraftanlage nach Anspruch 6, **dadurch gekennzeichnet, dass**:
- das erste Zentrierelement einen Zentrierzapfen (6-4) umfasst, der sich oberhalb der Bodenwand (4-4b) des rohrförmigen Hohlraums erstreckt, oder eine Zentrieröffnung (6-3), und der mit dem zweiten Zentrierelement, das eine Zentrieröffnung bzw. einen Zentrierzapfen umfasst, der sich unterhalb des unteren Endes (6-2) des Mastes erstreckt, zusammenwirkt, wobei der Zentrierzapfen (6-4) geeignet ist, in die Zentrieröffnung (6-3) eingeführt zu werden, und
- die Tragelemente ein erstes Tragelement, das aus einer verstärkten Struktur des unteren Endes des unteren Teils (6) des Mastes (3) um den und oberhalb des Zentrierzapfen(s) oder gegebenenfalls um die Zentrieröffnung herum besteht, sowie ein zweites Tragelement umfassen, das aus einer verstärkten Struktur der Bodenwand (4-4b) um den und unter dem Zentrierzapfen oder gegebenenfalls um die Zentrieröffnung herum besteht.

8. Offshore-Windkraftanlage (1) nach Anspruch 6 oder 7, **dadurch gekennzeichnet, dass** der untere Mastteil aus einem rohrförmigen Stecker (6), vorzugsweise aus Stahl, besteht, der einen rohrförmigen Teil (6a) umfasst, über dessen oberen Ende eine verstärkte Platte (6-1), deren Außendurchmesser größer als derjenige des rohrförmigen Innenteils (6a) des rohrförmigen Steckers (6) ist, angeordnet ist, wobei die Unterseite der verstärkten Platte (6-1) oberhalb einer ersten verstärkten Umfangsplattform (5), welche die obere Öffnung (4-4a) des rohrförmigen Hohlraums (4) umgibt, angeordnet ist, wenn der rohrförmige Stecker (6) vollständig in den rohrförmigen Hohlraum (4) eingesteckt ist und ein Zentrierzapfen (6-4) und eine Zentrieröffnung (6-3) zusammenwirken, wobei die verstärkte obere Platte (6-1) des rohrförmigen Steckers (6) einen Befestigungsflansch bildet, an dem ein Gegenflansch (3-1), der mit dem unteren Ende eines oberen Mastteils (3a), vorzugsweise aus Stahl, fest verbunden ist, befestigt ist, wobei die verstärkte obere Platte (6-1) des rohrförmigen Steckers (6) geeignet ist, an der ersten verstärkten oberen Plattform (5) des rohrförmigen Hohlraums (4) seitlich in Anschlag zu gelangen, um die Kräfte, die durch das Moment (M) der durch den Wind bedingten Kraft (Fₕ) oder gegebenenfalls die Neigung des rohrförmigen Steckers (6) innerhalb des rohrförmigen Hohlraums (4) bedingt sind, aufzunehmen.

9. Offshore-Windkraftanlage nach einem der Ansprüche 1 bis 8, **dadurch gekennzeichnet, dass** die Höhe des rohrförmigen Hohlraums (4-4) wenigstens gleich der Breite einer unteren Struktur (4-1) mit Kästen zum Ballastieren (4-2) des Sockels, der dazu bestimmt ist, am Meeresgrund aufzuliegen oder verankert zu sein, ist, oberhalb derer der rohrförmige Hohlraum sich um eine Höhe (H) von wenigstens 10 m, vorzugsweise von 15 bis 25 m erhebt, um einen Mast mit einer Höhe von wenigstens 50 m, vorzugsweise von 50 bis 150 m einzulassen.

10. Offshore-Windkraftanlage (1) nach einem der Ansprüche 1 bis 9, **dadurch gekennzeichnet, dass** der Sockel ein Schwerkraftfundament ist, das eine Vielzahl von Abteilen (4-2) vorzugsweise mit Trennwänden aus Beton umfasst, die eine im Wesentlichen quaderförmige untere Struktur (4-1) bilden, über deren Oberseite ein mittlerer rohrförmiger Hohlraum (4-4), vorzugsweise aus Beton, angeordnet ist, wobei der rohrförmige Hohlraum durch die quaderförmige untere Struktur (4-1) des Sockels getragen ist und mit dieser durch Verstärkungen vom Typ "Eckversteifung" (4-7) am unteren Teil des rohrförmigen Hohlraums verbunden ist, wobei die Abteile (4-2) mit Ballastmitteln, vorzugsweise mit Granulaten aus Materialien hoher Dichte, wie Eisengranulaten (9) gefüllt sind.

11. Offshore-Windkraftanlage (1) nach den Ansprüchen 9 und 10, **dadurch gekennzeichnet, dass** der rohrförmige Stecker (6) wenigstens teilweise mit Granulaten (9) zum Beschweren der verschiedenen Abteile (4-2) des Schwerkraftfundaments gefüllt ist.

12. Offshore-Windkraftanlage (1) nach einem der vorhergehenden Ansprüche, **dadurch gekennzeichnet, dass** die ebene untere Auflagefläche (4-5) des Sockels auf einem Schotterbett (20) am Meeresgrund aufliegt und um einen Winkel β kleiner als 5°, vorzugsweise kleiner als 2°, gegenüber der Horizontalen geneigt ist, und die Achse (ZZ') des Mastes (3) sich in im Wesentlichen vertikaler Position oberhalb des Meeresspiegels (30) befindet und um einen Winkel β gegenüber der Achse (Z₁Z'₁) des rohrförmigen Hohlraums geneigt ist.

13. Offshore-Windkraftanlage (1) nach einem der Ansprüche 1 bis 12, **dadurch gekennzeichnet, dass** die Festkeilmittel Betätigungseinrichtungen, vorzugsweise Hydraulikzylinder (7, 7a-7d), die mit der oberen Öffnung (4-4a) des rohrförmigen Hohlraums (4-4) fest verbunden sind, umfassen und mit der verstärkten Außenwand (6-5) des unteren Mastteils (6) zusammenwirken, um den unteren Mastteil (6) in vertikaler Position zu halten.

14. Verfahren zum Einstellen der Vertikalität eines Mastes (3) einer Offshore-Windkraftanlage (1) nach einem der Ansprüche 1 bis 13, bei dem ein unterer Mastteil (6) in das Innere eines rohrförmigen Hohlraums (4-4) eines Sockels (4), welcher auf einem Schotterbett am Meeresgrund (20) aufliegt, eingesteckt ist, derart, dass die Zentriermittel einen Schnittpunkt zwischen den Achsen (ZZ') des unteren Mastteils und (Z₁Z'₁) des rohrförmigen Hohlraums in fester Position im mittleren Bereich der Bodenwand (4-4b) des rohrförmigen Hohlraums halten, **dadurch gekennzeichnet, dass**:
1) eine Vielzahl von Betätigungseinrichtungen, vorzugsweise Hydraulikzylinder (7, 7a-7d), welche mit einer ersten Umfangsplattform (5) am oberen Ende des rohrförmigen Hohlraums, das oberhalb des Meeresspiegels (30) übersteht, fest verbunden sind, vorzugsweise an der ersten Umfangsplattform um den unteren Mastteil (6) herum gleichmäßig verteilt sind, angebracht werden und die Betätigungseinrichtungen, vorzugsweise die Hydraulikzylinder (7), betätigt werden, um die Achse (ZZ') des unteren Mastteils (6) in vertikaler Position zu positionieren, gegebenenfalls gegenüber der Achse (Z₁Z'₁) des rohrförmigen Hohlraums β-geneigt, und
2) Festkeilmittel (8) in dem Raum zwischen einer verstärkten Außenwand (6-5) des unteren Mastteils (6) und Anschlagmitteln (5-2), die mit der ersten Umfangsplattform (5) am oberen Ende des rohrförmigen Hohlraums (4) fest verbunden sind, an Ort und Stelle ausgebildet werden.

15. Verfahren nach dem vorhergehenden Anspruch, **dadurch gekennzeichnet, dass** die Neigung β des unteren Mastteils (6) innerhalb des rohrförmigen Hohlraums dadurch verändert wird, dass folgende Schritte durchgeführt werden, bei denen:
1) die Betätigungseinrichtungen, vorzugsweise Hydraulikzylinder, die auf der ersten Umfangsplattform angeordnet, vorzugsweise um den unteren Mastteil (6) herum gleichmäßig beabstandet sind, eingesetzt werden und sie betätigt werden, um den Mast in seiner aktuellen Position festzulegen, anschließend
2) Festkeilmittel (8), die einer ersten Neigungsposition der Achse (ZZ') des unteren Mastteils (6) und der Achse (Z₁Z'₁) des rohrförmigen Hohlraums entsprechen, wenigstens teilweise demontiert oder zerstört werden, und
3) die Betätigungseinrichtungen betätigt werden, um die Achse (ZZ') des unteren Mastteils in einer anderen Neigung β gegenüber der Achse (Z₁Z'₁) des rohrförmigen Hohlraums zu positionieren, wobei sich der Mast dann vorzugsweise in vertikaler Position befindet, und
4) die Festkeilmittel ersetzt oder verändert werden, so dass sie den gesamten Raum zwischen der Außenwand des unteren Mastteils gegenüber den mit der ersten Umfangsplattform fest verbundenen Anschlagmitteln (5-2), mit unterschiedlichen Abmessungen gegenüber der Ausgangsposition, einnehmen, unter Ausbilden der neuen Festkeilmittel an Ort und Stelle.

## Claims

1. An off-shore wind turbine (1) resting on the sea bottom, the wind turbine comprising:
• a base (4) having a bottom bearing surface (4-5) bearing against the ground of the sea bottom once in place; and
• a pylon (3) supported by said base, the bottom end of the pylon preferably being fixed in embedded manner in said base (4); and
• a wind engine (2) supported by said pylon at its top end and comprising a rotary shaft (2-2) of horizontal axis driven in rotation by an engine and supporting a plurality of blades (2-1) with said wind engine being coupled to an electricity generator (2-3), the generator preferably likewise being supported by said pylon at its top end; and
• said base (4) includes a tubular cavity (4-4) of axis (Z₁Z'₁) that is preferably perpendicular to said bottom bearing surface of the base, a bottom portion (6) of said pylon (3) being fixed inside said tubular cavity (4-4), the fixing being performed by means of a device for adjusting the angle of inclination of the axis (ZZ') of said pylon (3, 6) to be adjusted relative to the axis (Z₁Z'₁) of said tubular cavity;
said device for adjusting the angle of inclination of said pylon in said base comprising:
a) independent chocking means (8) interposed between said pylon bottom portion (6) and said tubular cavity (4-4) at the level (BB') of the top opening (4-4a) of said tubular cavity projecting above sea level (30) once in place; and
b) centering means (6-3, 6-4) secured to said pylon bottom portion (6) and to said tubular cavity, said centering means being situated inside said tubular cavity beneath said chocking means, and said centering means comprising a first centering element secured to a bottom wall (4-4b) of said tubular cavity, located at the center thereof and co-operating with a second centering element located at the center of the bottom end (6-2) of said pylon bottom portion (6), said centering means being suitable for holding the point of intersection between the axis (ZZ') of said pylon bottom portion (6) and the axis (Z₁Z'₁) of said tubular cavity in a fixed position at the bottom (4-4b) of said tubular cavity (4).

2. An off-shore wind turbine according to claim 1, **characterized in that** said chocking means comprise a plurality of chocks (8) that are destroyable and/or removable at least in part, so as to enable them to be replaced or modified in order to adjust the angle of inclination β of the axis (ZZ') of said bottom portion of the pylon relative to the axis (Z₁Z'₁) of said tubular cavity.

3. An off-shore wind turbine (1) according to claim 1 or claim 2, **characterized in that** said chocking means are constituted by a plurality of chocks (8) surrounding the outside wall of said pylon bottom portion, preferably being regularly distributed thereabout, said chocks (8) being arranged on a first reinforced peripheral platform (5) surrounding the top end of said tubular cavity, and said chocks occupying all of the space between abutment means (5-2) and a reinforced outside wall (6-5) of said pylon bottom portion positioned immediately above said top opening (4-4a) of the tubular cavity, facing said abutment means (5-2).

4. An off-shore wind turbine (1) according to claim 2 or claim 3, **characterized in that** each of said chocks includes at least one machine-welded metal structure that preferably extends over the full height of said chock, said machine-welded structure being suitable for being removed or destroyed.

5. An off-shore wind turbine (1) according to claim 2 or claim 3, **characterized in that** said chocks are made at least in part out of a material that is suitable for in situ casting and molding in the space between said abutment means (5-2) secured to said first peripheral platform and said reinforced outside wall (6-5) of said pylon bottom portion.

6. An off-shore wind turbine according to any one of claims 1 to 5, **characterized in that** said centering means co-operate with support means constituted by reinforced structural elements (6-2) of the bottom portion (6) of the pylon (3) and reinforced structural elements of the bottom (4-4b) of said tubular cavity (4), said support elements supporting and transferring the entire weight of said pylon (3) and of said wind engine (2) to the base (4) when said pylon is in a vertical position.

7. An off-shore wind turbine according to claim 6, **characterized in that**:
• said first centering element comprises a centering peg (6-4) extending above said bottom wall (4-4b) of said tubular cavity, or a centering orifice (6-3), and cooperates with said second centering element that respectively comprises a centering orifice or a centering peg extending below said bottom end (6-2) of the pylon, said centering peg (6-4) being suitable for being inserted in said centering orifice (6-3); and
• said support elements comprise a first support element consisting of a reinforced structure of the bottom end of said bottom portion (6) of the pylon (3) around and above said centering peg or around said centering orifice, as appropriate, and a second support element consisting of a reinforced structure of the bottom wall (4-4b) around and below said centering peg, or around said centering orifice, as appropriate.

8. An off-shore wind turbine (1) according to claim 6 or claim 7, **characterized in that** said pylon bottom portion consists of a tubular plug (6), preferably made of steel, comprising a tubular portion (6a) surmounted at its top end by a reinforced plate (6-1) of outside diameter greater than the diameter of said internal tubular portion (6a) of said tubular plug (6), the underface of said reinforced plate (6-1) being arranged above a first reinforced peripheral platform (5) surrounding the top opening (4-4a) of the tubular cavity (4) when said tubular plug (6) is fully engaged inside said tubular cavity (4) and a said centering peg (6-4) and a said centering orifice (6-3) are co-operating, said top reinforced plate (6-1) of the tubular plug (6) constituting a fastener flange having fastened thereto a complementary flange (3-1) secured to the bottom end of a pylon top portion (3a), preferably made of steel, said top reinforced plate (6-1) of the tubular plug (6) being suitable for coming into lateral abutment against said first reinforced top platform (5) of the tubular cavity (4) in order to take up the forces due to the moment (M) of the force (Fₕ) due to the wind, or due to the angle of inclination of the tubular plug (6) within said tubular cavity (4), as appropriate.

9. An off-shore wind turbine according to any one of claims 1 to 8, **characterized in that** the height of said tubular cavity (4-4) is not less than the width of a bottom structure (4-1) including caissons (4-2) for ballasting said base that is to rest on or to be anchored to the sea bottom, with said tubular cavity rising thereabove over a height H of at least 10 m, preferably 15 m to 25 m in order to have a pylon with a height of at least 50 m, and preferably 50 m to 150 m fixed therein in embedded manner.

10. An off-shore wind turbine (1) according to any one of claims 1 to 9, **characterized in that** said base is a gravity base having a plurality of compartments (4-2) preferably separated by concrete walls forming a substantially rectangular bottom structure (4-1) surmounted on its top face by a said central tubular cavity (4-4) that is preferably made of concrete, said tubular cavity being supported by said rectangular bottom structure (4-1) of the base and being connected thereto by gusset-type reinforcement (4-7) in the bottom portion of said tubular cavity, said compartments (4-2) being filled with ballasting means, preferably granulate of high density material such as iron granulate (9).

11. An off-shore wind turbine (1) according to claims 9 and 10, **characterized in that** said tubular plug (6) is filled at least in part with said granulate (9) for ballasting the various compartments (4-2) of said gravity base.

12. An off-shore wind turbine (1) according to any preceding claim, **characterized in that** the plane bottom bearing surface (4-5) of said base rests on a stone covering (20) on the sea bottom and is inclined at an angle β of less than 5°, preferably of less than 2°, relative to the horizontal, and the axis (ZZ') of said pylon (3) is in a substantially vertical position above sea level (30) and is inclined at a said angle β relative to the axis (Z₁Z'₁) of said tubular cavity.

13. An off-shore wind turbine (1) according to any one of claims 1 to 12, **characterized in that** said chocking means include actuators, preferably hydraulic jacks (7, 7a-7d) secured to the top opening (4-4a) of said tubular cavity (4-4) and co-operating with the reinforced outside wall (6-5) of said pylon bottom portion (6) so as to hold said pylon bottom portion (6) in a vertical position.

14. A method of adjusting the verticality of a pylon (3) of an off-shore wind turbine (1) according to any one of claims 1 to 13, wherein a said pylon bottom portion (6) is engaged inside a said tubular cavity (4-4) of a base (4) resting on a stone covering on the sea bottom (20) in such a manner that said centering means hold a said point of intersection between the axis (ZZ') of said pylon bottom portion and the axis (Z₁Z'₁) of said tubular cavity in a fixed position at the center of the bottom wall (4-4b) of said tubular cavity, the method being **characterized by**:
1) installing a plurality of actuators, preferably hydraulic jacks (7, 7a-7d) secured to a first peripheral platform (5) at the top end of said tubular cavity projecting above sea level (30), preferably regularly distributed on said first peripheral platform around said pylon bottom portion (6), and actuating said actuators, preferably said hydraulic jacks (7), in such a manner as to position the axis (ZZ') of said pylon bottom portion (6) in a vertical position, possibly inclined by an angle β relative to the axis (Z₁Z'₁) of said tubular cavity; where appropriate; and
2) making said chocking means (8) in situ in the space between the reinforced outside wall (6-5) of said pylon bottom portion (6) and abutment means (5-2) secured to said first peripheral platform (5) at the top end of said tubular cavity (4).

15. A method according to the preceding claim, **characterized in that** the angle of inclination β of said pylon bottom portion (6) inside said tubular cavity is modified by performing the following steps:
1) placing said actuators, preferably hydraulic jacks, on said first peripheral platform, preferably regularly spaced around the pylon bottom portion (6), and actuating them in such a manner as to hold said pylon in its current position; then
2) removing or destroying at least in part at least some of said chocking means (8) corresponding to a first angle of inclination of said axis (ZZ') of said pylon bottom portion (6) relative to the axis (Z₁Z'₁) of said tubular cavity; and
3) actuating said actuators so as to position the axis (ZZ') of said pylon bottom portion at a different angle of inclination β relative to the axis (Z₁Z'₁) of said tubular cavity, preferably so that said pylon is then in a vertical position; and
4) replacing or modifying said chocking means in such a manner as to occupy all of the space between the outside wall of said pylon bottom portion facing said abutment means (5-2) secured to said first peripheral platform, the chocking means being of dimensions that are different relative to the initial position, by once more making chocking means in situ.
